# EUROPÄISCHE PATENTSCHRIFT

(11) **EP 4 347 233 B1**
(45) Veröffentlichungstag und Bekanntmachung des Hinweises auf die Patenterteilung: **02.04.2025**
(21) Anmeldenummer: 21815907.7
(22) Anmeldetag: 18.11.2021
(51) Int. Cl.: B29D 30/06

(54) **VERFAHREN ZUR HERSTELLUNG EINER VULKANISIERFORM UND EINE NACH DIESEM VERFAHREN HERGESTELLTE VULKANISIERFORM**
METHOD FOR PRODUCING A VULCANIZING MOLD AND VULCANIZING MOLD PRODUCED ACCORDING TO THIS METHOD
PROCÉDÉ DE PRODUCTION D'UN MOULE DE VULCANISATION ET MOULE DE VULCANISATION PRODUIT SELON CE PROCÉDÉ

(30) Priorität: 01.06.2021 DE 102021205576
(43) Veröffentlichungstag der Anmeldung: 10.04.2024
(73) Patentinhaber: Continental Reifen Deutschland GmbH, 30175 Hannover (DE)
(72) Erfinder: HOPPE, Nicholas, 30165 Hannover (DE); DZICK, Jürgen, 30165 Hannover (DE)
(74) Vertreter: Continental Corporation
(86) Internationale Anmeldenummer: PCT/DE2021/200192
(87) Internationale Veröffentlichungsnummer: WO 2022/253369

(56) Entgegenhaltungen:
- EP-A1- 3 321 078
- DE-A1- 102012 102 322
- DE-A1- 102018 202 603

## Beschreibung

Die Erfindung betrifft ein Verfahren zur Herstellung einer Vulkanisierform für Fahrzeugreifen, die radial innenseitig Formflächen aus einem gegossenen Formwerkstoff mit Formvorsprüngen zur Formung von Profileinschnitten im herzustellenden Fahrzeugreifen aufweist.

Die Erfindung betrifft ferner auch eine nach einem solchen Verfahren hergestellte Vulkanisierform zur Herstellung von Fahrzeugreifen.

Vulkanisierformen für Fahrzeugreifen bestehen unter anderem aus Formsegmenten, deren Formflächen gemeinsam die radial äußere Oberfläche des herzustellenden Reifens, wie den Laufstreifen, den Schulterbereich, die Seitenwände und den Wulstbereich formen.

Die Formsegmente der Vulkanisierform sind aus Metall gefertigt, üblicherweise aus Stahl oder Aluminium. Während aus Stahl hergestellte Formflächen häufig spanabhebend aus einem Vollmaterial gefertigt werden, werden aus Aluminium hergestellte Formflächen üblicherweise in einem Gießverfahren hergestellt. Dem Fachmann sind mittengeteilte Vulkanisierformen und segmentierte Vulkanisierformen hinreichend bekannt.

Der unvulkanisierte grüne Reifenrohling wird in der Vulkanisierform heizgepresst und durch Kautschukvernetzungsreaktionen in seinen endgültigen gummielastischen Zustand überführt. Dabei erhält der Fahrzeugreifen seine Profil- und Seitenwandgestaltung durch die entsprechende Negativkontur der Formflächen mit entsprechenden Formvorsprüngen zur Formung von Profileinschnitten.

Solche Profileinschnitte können beispielsweise einzelne Profilblöcke begrenzen. Insbesondere Winterreifen weisen zudem feine Einschnitte in den Profilelementen des Laufstreifens auf, die dem Reifen vorteilhafte Eigenschaften auf winterlicher Fahrbahn geben. Diese Einschnitte können bisweilen komplexe dreidimensionale Formgestaltungen aufweisen, sodass die Herstellung der entsprechenden Formvorsprünge in der Formfläche der Vulkanisierform entsprechend aufwendig ist.

Bei konventionellen Gussformen zum Beispiel aus Aluminium mit gegossenen Formvorsprüngen liegen materialbedingte Festigkeitslimitationen vor, welche die fertigungstechnische Umsetzung von funktionalen Formstrukturen, insbesondere feinen Formvorsprüngen einschränken.

Es ist im Stand der Technik auch bekannt, derartige Formvorsprünge gesondert zu den übrigen Formflächen der Vulkanisierform herzustellen. Um etwa fragile Strukturen, wie Lamellen, in einer Gussform für die Reifenproduktion einsetzbar zu machen, werden diese aus anderen Materialien mit anderen mechanischen Kennwerten, beispielsweise aus Stahlblech, hergestellt und mit einem angeformten Verankerungsteil unterhalb der Oberfläche der Formfläche in diese eingegossen. Durch den Einguss ergibt sich ein Formschluss, jedoch kein Stoffschluss. Darüber hinaus sind derartige Lamellenbleche insbesondere bei 3-dimensionalen feinen Einschnitten sehr schwer herzustellen. Auch unterliegen derartige eingegossene, gesondert hergestellte Formvorsprünge fertigungstechnisch begründet größeren Toleranzen als unmittelbar gegossene Strukturen.

Es stellt sich damit insbesondere bei sehr schmalen und hohen Formvorsprüngen, welche bis auf volle Profiltiefe gehen, das Problem, dass gegossene Strukturen zwar innerhalb der zulässigen Höhentoleranz liegen, aber nur geringe Haltbarkeit aufweisen und andererseits gesondert erstellte Stahleinsätze zur Ausbildung der Formvorsprünge zwar gute Haltbarkeit aufweisen, jedoch häufig außerhalb der Höhentoleranzen liegen.

Aus der DE 10 2012 102 322 A1 ist es ferner vorgeschlagen worden, die Formvorsprünge in einem Rapid-Prototyping-Verfahren, beispielsweise 3D Druck oder Lasersinterverfahren herzustellen und die solchermaßen hergestellten Formvorsprünge nachträglich in die gegossene Formfläche einzubringen. Allerdings gestaltet sich sowohl die Herstellung der Formvorsprünge als auch das nachträgliche Einbringen in die gegossene Formfläche aufwendig, was verbesserungswürdig erscheint.

Aufgabe der Erfindung ist es daher, ein Verfahren zur Herstellung einer Vulkanisierform sowie eine entsprechend hergestellte Vulkanisierform vorzuschlagen, die die Nachteile des Standes der Technik überwindet.

Zur Lösung der gestellten Aufgabe wird erfindungsgemäß die Ausgestaltung eines Verfahrens gemäß den Merkmalen des Patentanspruchs 1 vorgeschlagen.

Ferner wird zur Lösung der gestellten Aufgabe auch eine entsprechende Vulkanisierform gemäß den Merkmalen des Patentanspruches 7 vorgeschlagen.

Vorteilhafte Ausgestaltungen und Weiterbildungen der Erfindung sind Gegenstand der abhängigen Ansprüche.

Das im Rahmen der Erfindung vorgeschlagene Verfahren zur Herstellung der Vulkanisierform sieht vor, dass zur Bildung eines Formvorsprunges zunächst ein Kern aus einem Metall höherer Festigkeit als der Formwerkstoff bereitgestellt und anschließend der Kern während des Gießens der Formflächen mit dem Formwerkstoff mindestens teilweise überzogen wird, wodurch zugleich mit der Ausbildung der Formflächen auch die Formvorsprünge aus dem gegossenen Formwerkstoff mit innenliegendem Kern gebildet werden.

Derartige erfindungsgemäß in der Vulkanisierform ausgebildete Formvorsprünge aus dem gegossenen Formwerkstoff mit einem inneren Kern aus einem Metall höherer Festigkeit zeichnen sich auch bei sehr schmalen und/oder komplexen Querschnittsgestaltungen durch besonders hohe mechanische Haltbarkeit als auch durch eine zuverlässige Einhaltung der gebotenen Höhentoleranzen aus. Die Herstellung der Vulkanisierform wird zugleich bedeutend vereinfacht.

Es versteht sich, dass nach dem erfindungsgemäßen Verfahren mindestens ein Formvorsprung, insbesondere mit komplexer oder schmaler und hoher Gestalt hergestellt wird. Gleichwohl können auch Formvorsprünge konventioneller Bauform mit den nach dem erfindungsgemäßen Verfahren hergestellten Formvorsprüngen in einer Formfläche kombiniert werden.

Erfindungsgemäß ist die innenseitige Formfläche der Vulkanisierform einschließlich der vorhandenen Formvorsprünge zur Formung der Profileinschnitte in herzustellenden Fahrzeugreifen vollständig aus dem gegossenen Formwerkstoff gebildet, jedoch sind die Formvorsprünge mit einem verstärkenden Kern aus Metall nach Art einer Bewehrung versehen und zumindest teilweise vom gegossenen Formwerkstoff eingefasst und in die gegossene Formfläche integriert.

Nach einem Vorschlag der Erfindung ist der Kern vollständig mit Formwerkstoff überzogen und von diesem eingehüllt, sodass er bei Betrachtung der Formflächen nicht mehr sichtbar ist.

Nach einem weiteren Vorschlag der Erfindung weist der Kern eine Vielzahl von Durchbrechungen auf, die vom Formwerkstoff während des Gießvorganges durchdrungen werden. Auf diese Weise wird eine innige formschlüssige Verbindung des die Kontur der Formvorsprünge bildenden Formwerkstoffes mit dem innenliegenden Kern erzeugt, da zwischen dem Kern aus Metall höherer Festigkeit und dem Formwerkstoff nicht in jedem Fall ein Stoffschluss hergestellt werden kann.

Nach einem Vorschlag der Erfindung können die Durchbrechungen dadurch hergestellt werden, dass eine Vielzahl von Bohrungen im Kern ausgebildet werden, in die der Formwerkstoff beim Überziehen des Kerns eindringen kann.

Alternativ kann der Kern auch eine gitterartige Struktur oder jedwede andere offene Struktur oder Geometrie aufweisen, die die Durchbrechungen enthält. Eine solche Ausgestaltung ist insbesondere dann von Vorteil, wenn die den Kern umgebende Wandstärke des überzogenen Formwerkstoffes sehr gering ist. Ansonsten besteht das Risiko, dass der geschmolzene Formwerkstoff beim Gießen am Kern vorzeitig erstarrt und die Struktur desselben nicht vollends durch die Schmelze durchdrungen wird. Bei Ausgestaltung des Kerns aus einer gitterartigen Struktur gewährleistet jedoch die Vielzahl an vorhandenen Durchbrechungen, dass der geschmolzene gegossene Formwerkstoff den Kern vollständig auffüllt. Hierdurch wird zudem die Verbindung des Kerns mit dem umgebenden Formwerkstoff verbessert.

Als Material für die Bildung des Kerns wird insbesondere Stahl als geeignet angesehen, wobei in an sich bekannter Weise der gegossene Formwerkstoff vorzugsweise auf Basis von Aluminium oder einer entsprechenden Legierung ausgewählt wird.

Nach einem weiteren Vorschlag der Erfindung kann der Kern beispielsweise aus einem gebogenen Blechzuschnitt oder auch in einem additiven Verfahren zum Beispiel aus einem lasergesinterten oder mittels eines 3D Druckers geformten Material hergestellt werden. In jedem Fall muss bei der Gestaltung der Kerne in Anbetracht der zu erwartenden Belastungen eine entsprechende konstruktive Gestaltung erfolgen, gegebenenfalls unter Hinzunahme mathematischer Topologie-Optimierungs-Modelle.

Für die Herstellung des Kerns aus einem lasergesinterten Material kommen insbesondere mittels Lasersintern zu verarbeitende Metalle und deren Legierungen, wie Stähle, Aluminium, Titan sowie auch andere Sintermetalle und Sinterwerkstoffe, wie Keramiken und Aluminiumoxid in Betracht.

An dem teilweise oder vollständig mit Formwerkstoff eingehüllten Kern kann bei Bedarf ein ebenfalls zumindest bereichsweise nicht mit dem Formwerkstoff bedecktes Lamellenblech befestigt, z. B. angeschweißt werden, um auch feinste Strukturen hochexakt positionierbar in dem Formvorsprung abzubilden.

Insbesondere bei Herstellung der Kerne in einem additiven Verfahren können simulierte und optimierte Strukturen mit komplexer Geometrie unmittelbar aus den im Modell berechneten Daten mit größter Genauigkeit hergestellt werden.

Jeder einzelne Kern kann überdies bei Bedarf zur Erhöhung der Verbindungssteifigkeit entlang seiner Erstreckungsachsen mit weiteren Ausstattungselementen, beispielsweise angeformten Versteifungsrippen versehen werden.

Weitere Ausgestaltungen und Einzelheiten der Erfindung werden nachfolgend anhand der Zeichnung in Ausführungsbeispielen erläutert. Es zeigen:
- Figur 1: in schematischer Darstellung eine Vulkanisierform für Fahrzeugreifen gemäß der Erfindung;
- Figur 2 a: den Querschnitt durch einen Formvorsprung in einer ersten Ausführungsform der Erfindung;

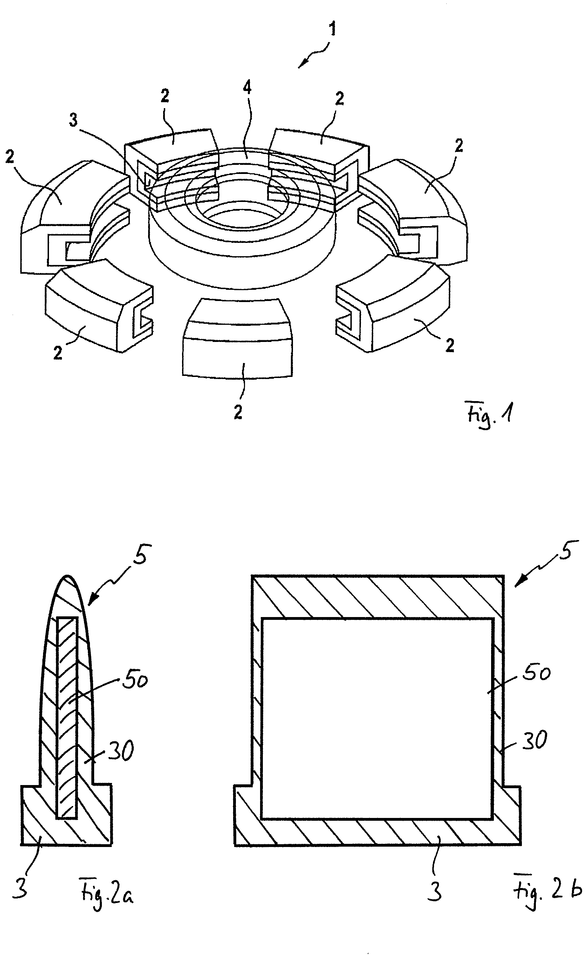

- Figur 2 b: den Längsschnitt durch den Formvorsprung gemäß Figur 2 a;

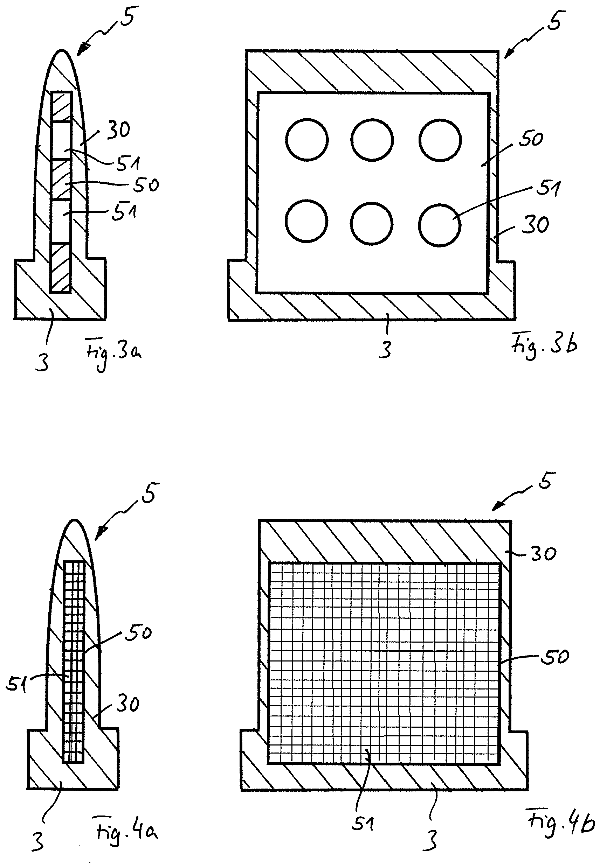

- Figur 3 a: den Querschnitt durch einen Formvorsprung in einer zweiten Ausführungsform der Erfindung;
- Figur 3 b: den Längsschnitt durch den Formvorsprung gemäß Figur 3 a;
- Figur 4 a: den Querschnitt durch einen Formvorsprung in einer dritten Ausführungsform der Erfindung;
- Figur 4 b: den Längsschnitt durch den Formvorsprung gemäß Figur 4 a;

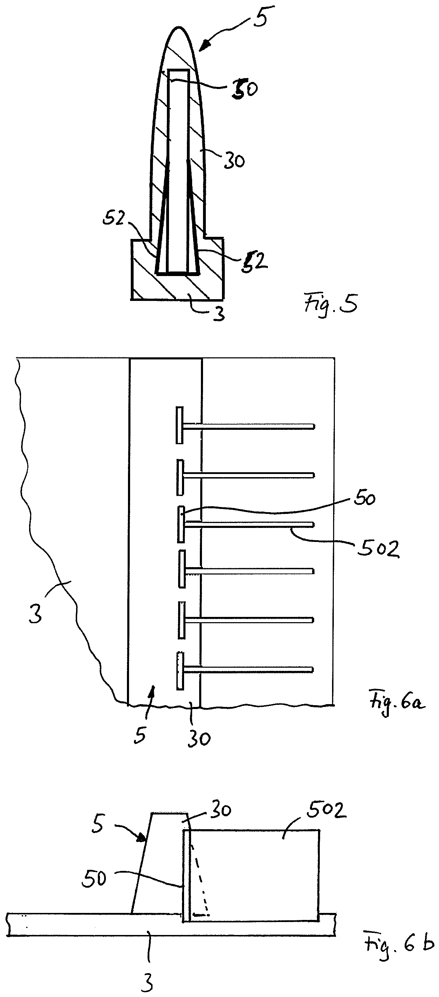

- Figur 5: den Querschnitt durch einen Formvorsprung in einer vierten Ausführungsform der Erfindung;
- Figur 6a: die Aufsicht auf eine sechste Ausführungsform der Erfindung;
- Figur 6b: einen Schnitt durch die Ausführungsform gemäß Figur 6a;

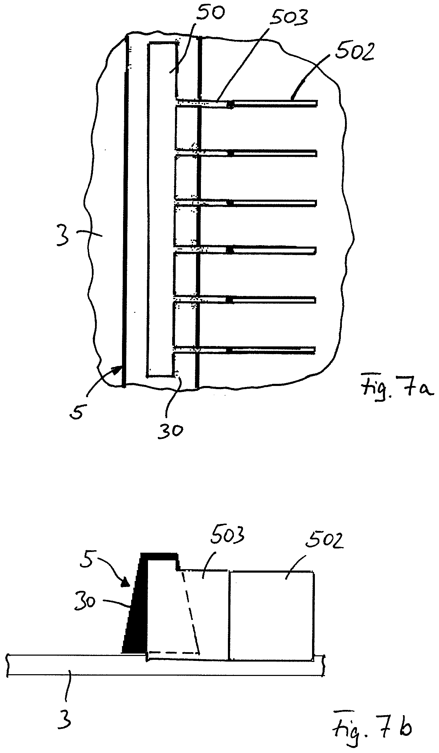

- Figur 7a: die Aufsicht auf eine siebte Ausführungsform der Erfindung;
- Figur 7b: einen Schnitt durch die Ausführungsform gemäß Figur 7a.

Aus der Figur 1 ist in einer stark vereinfachten schematisierten Darstellung eine Vulkanisierform 1 für die Herstellung eines angedeuteten Fahrzeugreifens 4 ersichtlich, der als grüner, unvulkanisierter Reifenrohling in die Vulkanisierform 1 eingelegt und in der Vulkanisierform 1 in an sich bekannter Weise heizgepresst wird, wobei er durch Kautschukvernetzungsreaktionen in seinen endgültigen gummielastischen Zustand überführt wird. Die Vulkanisierform 1 besteht dazu aus einer Vielzahl von öffen- und schließbaren Formsegmenten 2, die auf ihrer dem Fahrzeugreifen 4 zugewandten radialen Innenseite gegossene Formflächen 3 aus einem Formwerkstoff 30, beispielsweise Aluminium, aufweisen. Diese Formflächen weisen eine in der Darstellung gemäß Figur 1 nicht im einzelnen wiedergegebenen Oberflächenprofilierung mit vorstehenden Formvorsprüngen 5 auf, die die Negativform der im herzustellenden Fahrzeugreifen 4 gewünschten Positivform mit Profilblöcken, Lamellen, Beschriftungen etc. darstellen. Insbesondere bei sehr feinen und bis auf volle Profiltiefe reichenden Formvorsprüngen 5, die in verschiedenen Ausführungsformen den Darstellungen gemäß Figuren 2 a bis 5 dargestellt sind, werden an die Festigkeit und Maßhaltigkeit derselben höchste Anforderungen gestellt.

Bezüglich der Darstellungen der Formvorsprünge 5 gemäß den nachfolgend erläuterten Figuren 2 a bis 5 sei zunächst angemerkt, dass diese Figuren lediglich schematisch und beispielhaft den Aufbau verdeutlichen, wobei jedoch auf die real vorhandene bisweilen komplexe dreidimensionale Gestaltung aus Vereinfachungsgründen nicht zurückgegriffen wird.

Wie aus der Darstellung einer ersten Ausführungsform eines Formvorsprunges 5 gemäß Figuren 2 a und 2 b ersichtlich, wird zur Ausbildung desselben zunächst ein Kern 50 aus einem Metall höherer Festigkeit als der Formwerkstoff 30 bereitgestellt, beispielsweise ein Zuschnitt eines Stahlblechs. Anschließend wird während der Herstellung der aus dem Formwerkstoff 30, insbesondere Aluminium, im Gießverfahren hergestellten Formfläche 3 der Kern 50 vom gegossenen Formwerkstoff 30 vollständig überzogen und eingehüllt, sodass der Formwerkstoff 30 die äußere Kontur und damit die gewünschte Geometrie des Formvorsprunges 5 bildet und der Kern 50 innenliegend nach Art einer Bewehrung angeordnet wird. Der Formvorsprung 5 erhebt sich von daher integral aus der gegossenen Formfläche 3 und weist aufgrund des Überzugs des Kerns 50 aus dem gegossenen Formwerkstoff 30 höchste Form- und Maßtoleranz auf, wobei gleichzeitig der innenliegend angeordnete Kern 50 aus Stahl für besonders hohe Festigkeit und mechanische Belastbarkeit des Formvorsprunges 5 sorgt.

Gemäß der Darstellung in den Figuren 3 a und 3 b kann der Kern 50 überdies eine Vielzahl von Durchbrechungen 51 aufweisen, die beispielsweise durch Einbringen von Bohrungen in den Kern 50 gebildet werden können. Obwohl in den Darstellungen gemäß Figuren 3 a und 3 b nicht explizit dargestellt, werden diese Durchbrechungen 51 bei der Ausbildung des Überzuges des Kerns 50 mit dem Formwerkstoff 30 vollständig von diesem aufgefüllt, wodurch sich ein intensiver Formschluss zwischen dem Kern 50 und dem Formwerkstoff 30 einstellt, der den Kern 50 einhüllt und überzieht.

Ein ähnlicher Effekt kann auch dadurch hergestellt werden, dass der Kern 50 gemäß dem Ausführungsbeispiel der Figuren 4 a und 4 b eine Gitterstruktur oder vergleichbare offene Struktur aufweist, in dem der Kern 50 beispielsweise aus einem Stahlgitter hergestellt ist. Auch eine solche Gitterstruktur definiert eine Vielzahl von Durchbrechungen 51, die vom flüssig während des Gießens der Formflächen 3 aufgeschmolzenen Formwerkstoff 30 aufgefüllt werden. Überdies wird durch eine solche Konfiguration bei sehr geringen Wandstärken des den Kern 50 überziehenden Formwerkstoffes 30 vermieden, dass der geschmolzene Formwerkstoff 30 am Kern 50 vorzeitig erstarrt und der Kern 50 nicht vollständig mit Formwerkstoff 30 aufgefüllt wird.

Gemäß dem Ausführungsbeispiel in der Figur 5 kann der Kern 50 überdies zur Erhöhung seiner Verbindungssteifigkeit entlang seiner Erstreckungsachsen mit weiteren vorstehenden Aussteifungselementen, beispielsweise außenseitig angeforderten Versteifungsrippen 52 ausgebildet sein.

Die in den vorangehend erläuterten Ausführungsbeispielen im Formwerkstoff 30 eingehüllten Kerne 50 können beispielsweise aus einem Blechzuschnitt geformt werden, der gegebenenfalls in eine gewünschte Form geschnitten und gebogen wird oder auch in einem additiven Verfahren, zum Beispiel mittels Lasersintern oder 3 D Druck nach Maßgabe einer berechneten Gestaltung hergestellt werden.

Die Figuren 6a und 6b zeigen eine weitere Ausführungsform der Vulkanisierform. In einem aus dem Formwerkstoff 30 gegossenen Formvorsprung 5 nach Art einer Rippe sind eine Vielzahl von Kernen 50 vollständig eingegossen, d.h. sie werden beim Gießvorgang vollständig mit dem Formwerkstoff 30 eingehüllt. Ferner ist an jedem der Kerne 50 etwa T-förmig ein Lamellenblech 502 befestigt, beispielsweise angeschweißt. Die Befestigung erfolgt bereits vor dem Eingießen des Kerns 50 im Formwerkstoff. Das solchermaßen am eingegossenen Kern 50 befestigte Lamellenblech 502 ist nach dem Gießen des Formwerkstoffes 30 aus der gebildeten Rippe 503 bereichsweise herausgeführt und in diesem herausgeführten Bereich nicht mit dem Formwerkstoff 30 eingehüllt. Es bildet als Teil des Formvorsprunges 5 auch feinste Lamellenstrukturen präzise positioniert ab.

In den Figuren 7a und 7b ist eine weitere Ausführungsform der Vulkanisierform dargestellt. Hierbei ist der Kern 50 innerhalb des aus dem Formwerkstoff 30 gegossenen Formvorsprunges 5 angeordnet, verfügt aber über mehrere winklig abstehende Schenkel 503, die mit ihrem freien Ende aus dem Formwerkstoff 30 hervortreten, so dass der Kern 50 in diesem Teilbereich seiner Schenkel 503 nicht mit Formwerkstoff 30 eingehüllt ist. An diesen freien Enden der Schenkel 503 sind sodann jeweils nicht vom Formwerkstoff 30 bedeckte Lamellenbleche 502 befestigt, z.B. angeschweißt, um als Teil des Formvorsprunges 5 feinste Strukturen abzubilden.

Mit dem vorangehend erläuterten Verfahren und der danach hergestellten Vulkanisierform können insbesondere Formvorsprünge mit schmalen Quervoid inclusive Chamfern mit hoher Präzision und gesteigerter Haltbarkeit hergestellt werden.

Es versteht sich, dass das vorangehend erläuterte Verfahren auch für andere Anwendungszwecke im Formenbau Verwendung finden kann.

### Bezugszeichenliste

- 1:: Vulkanisierform
- 2:: Formsegment
- 3:: Formflächen
- 4:: Fahrzeugreifen
- 5:: Formvorsprung
- 30:: Formwerkstoff
- 50:: Kern
- 51:: Durchbrechung
- 52:: Versteifungsrippe
- 502:: Lamellenblech
- 503:: Schenkel

## Patentansprüche

1. Verfahren zur Herstellung einer Vulkanisierform (1) für Fahrzeugreifen (4), wobei die Vulkanisierform (1) radial innenseitig gegossene Formflächen (3) aus einem Formwerkstoff (30) mit Formvorsprüngen (5) zur Formung von Profileinschnitten im herzustellenden Fahrzeugreifen (4) aufweist, **dadurch gekennzeichnet, dass** zur Bildung eines Formvorsprunges (5) ein Kern (50) aus einem Metall höherer Festigkeit als der Formwerkstoff (30) bereitgestellt und während des Gießens der Formflächen (3) mit dem Formwerkstoff (30) mindestens teilweise überzogen wird.

2. Verfahren nach Anspruch 1, **dadurch gekennzeichnet, dass** der Kern (50) vollständig mit dem Formwerkstoff (30) überzogen und eingehüllt wird.

3. Verfahren nach Anspruch 1 oder 2, **dadurch gekennzeichnet, dass** an dem Kern (50) mindestens ein Lamellenblech (502) befestigt wird, welches zumindest bereichsweise nicht mit dem Formwerkstoff (30) überzogen wird.

4. Verfahren nach einem der Ansprüche 1 bis 3, **dadurch gekennzeichnet, dass** der Formwerkstoff (30) auf Basis von Aluminium verwendet wird und der Kern (5) aus Stahl gebildet wird.

5. Verfahren nach einem der Ansprüche 1 bis 4, **dadurch gekennzeichnet, dass** der Kern (5) eine Vielzahl von Durchbrechungen (51) aufweist, die vom Formwerkstoff (30) durchdrungen werden.

6. Verfahren nach Anspruch 5, **dadurch gekennzeichnet, dass** die Durchbrechungen (51) in Form von Bohrungen im Kern (5) ausgebildet werden oder der Kern (5) eine gitterartige Struktur aufweist, die die Durchbrechungen (51) enthält.

7. Verfahren nach einem der Ansprüche 1 bis 6, **dadurch gekennzeichnet, dass** der Kern (5) aus einem Blechzuschnitt oder in einem additiven Verfahren hergestellt wird.

8. Vulkanisierform (1) zur Herstellung von Fahrzeugreifen (4), die radial innenseitig Formflächen (3) mit Formvorsprüngen (5) aus einem gegossenen Formwerkstoff (30) aufweist und zur Formung von Profileinschnitten im herzustellenden Fahrzeugreifen (4) aufweist, **dadurch gekennzeichnet, dass** die Formvorsprünge (5) jeweils einen Kern (50) aus einem Metall höherer Festigkeit als der Formwerkstoff (30) aufweisen, der mit dem Formwerkstoff zumindest teilweise überzogen ist.

9. Vulkanisierform (1) nach Anspruch 8, **dadurch gekennzeichnet, dass** der Kern (50) vollständig mit dem Formwerkstoff (30) überzogen und eingehüllt ist.

10. Vorrichtung nach Anspruch 9, **dadurch gekennzeichnet, dass** an dem Kern (50) mindestens ein aus dem Formwerkstoff (30) hervortretendes Lamellenblech (502) befestigt ist.

11. Vulkanisierform nach einem der Ansprüche 8 bis 10, **dadurch gekennzeichnet, dass** der Kern (50) eine Vielzahl von Durchbrechungen (51) aufweist, die von dem Formwerkstoff (30) aufgefüllt sind.

12. Vulkanisierform nach Anspruch 11, **dadurch gekennzeichnet, dass** die Durchbrechungen (51) von Bohrungen im Kern (50) gebildet sind oder der Kern (50) eine gitterartige Struktur aufweist, die die Durchbrechungen (51) bildet.

13. Vulkanisierform nach einem der Ansprüche 8 bis 12, **dadurch gekennzeichnet, dass** der Kern (50) außenseitig angeformte Versteifungsrippen (52) aufweist.

## Claims

1. Method for producing a vulcanizing mould (1) for vehicle tyres (4), wherein the vulcanizing mould (1) has radially on the inside cast mould surfaces (3) of a mould material (30) with mould projections (5) for forming cuts in the tread profile of the vehicle tyre (4) to be manufactured, **characterized in that**, for forming a mould projection (5), a core (50) of a metal of higher strength than the mould material (30) is provided and is at least partially coated with the mould material (30) during the casting of the mould surfaces (3).

2. Method according to Claim 1, **characterized in that** the core (50) is completely coated with and encased by the mould material (30).

3. Method according to Claim 1 or 2, **characterized in that** at least one sipe blade (502), at least a region of which is not coated with the mould material (30), is attached to the core (50).

4. Method according to one of Claims 1 to 3, **characterized in that** the mould material (30) is used on the basis of aluminium and the core (5) is formed from steel.

5. Method according to one of Claims 1 to 4, **characterized in that** the core (5) has a multiplicity of apertures (51), which are penetrated by the mould material (30).

6. Method according to Claim 5, **characterized in that** the apertures (51) are formed in the form of bores in the core (5) or the core (5) has a grid-like structure containing the apertures (51).

7. Method according to one of Claims 1 to 6, **characterized in that** the core (5) is produced from a sheet metal blank or in an additive process.

8. Vulcanizing mould (1) for the manufacture of vehicle tyres (4), which has radially on the inside mould surfaces (3) with mould projections (5) of a cast mould material (30) and for forming cuts in the tread profile of the vehicle tyre (4) to be manufactured, **characterized in that** the mould projections (5) each have a core (50) of a metal of higher strength than the mould material (30) which is at least partially coated with the mould material.

9. Vulcanizing mould (1) according to Claim 8, **characterized in that** the core (50) is completely coated with and encased by the mould material (30).

10. Device according to Claim 9, **characterized in that** at least one sipe blade (502) protruding from the mould material (30) is attached to the core (50).

11. Vulcanizing mould according to one of Claims 8 to 10, **characterized in that** the core (50) has a multiplicity of apertures (51), which are filled by the mould material (30).

12. Vulcanizing mould according to Claim 11, **characterized in that** the apertures (51) are formed by bores in the core (50) or the core (50) has a grid-like structure, which forms the apertures (51).

13. Vulcanizing mould according to one of Claims 8 to 12, **characterized in that** the core (50) has externally formed-on stiffening ribs (52).

## Revendications

1. Procédé de fabrication d'un moule de vulcanisation (1) pour pneus de véhicule (4), dans lequel le moule de vulcanisation (1) présente sur la face radialement intérieure des surfaces de moule (3) coulées d'un matériau de moulage (30), pourvues de saillies de moule (5) pour mouler des encoches de sculpture dans le pneu de véhicule (4) à fabriquer, **caractérisé en ce que** pour former une saillie de moule (5), un noyau (50) d'un métal de résistance supérieure au matériau de moulage (30) est fourni et recouvert au moins partiellement du matériau de moulage (30) pendant le coulage des surfaces de moule (3).

2. Procédé selon la revendication 1, **caractérisé en ce que** le noyau (50) est entièrement recouvert et enveloppé par le matériau de moulage (30).

3. Procédé selon la revendication 1 ou 2, **caractérisé en ce qu'**au moins une tôle à lamelles (502) est fixée au noyau (50) et recouverte au moins par endroits du matériau de moulage (30).

4. Procédé selon l'une quelconque des revendications 1 à 3, **caractérisé en ce que** le matériau de moulage (30) à base d'aluminium est utilisé, et le noyau (5) est fait d'acier.

5. Procédé selon l'une quelconque des revendications 1 à 4, **caractérisé en ce que** le noyau (5) présente une pluralité d'ajours (51) qui sont traversés par le matériau de moulage (30).

6. Procédé selon la revendication 5, **caractérisé en ce que** les ajours (51) sont réalisés sous forme d'alésages dans le noyau (5), ou le noyau (5) présente une structure en forme de grille qui comporte les perçages (51).

7. Procédé selon l'une quelconque des revendications 1 à 6, **caractérisé en ce que** le noyau (5) est fabriqué à partir d'un flan de tôle ou par un procédé additif.

8. Moule de vulcanisation (1) permettant de fabriquer des pneus de véhicule (4), qui présente sur la face radialement intérieure des surfaces de moule (3) pourvues de saillies de moule (5) en matériau de moulage (30) coulé, et les présente pour le moulage d'encoches de sculpture dans le pneu de véhicule (4) à fabriquer, **caractérisé en ce que** les saillies de moule (5) présentent respectivement un noyau (50) d'un métal de résistance supérieure au matériau de moulage (30), qui est au moins partiellement recouvert du matériau de moulage.

9. Moule de vulcanisation (1) selon la revendication 8, **caractérisé en ce que** le noyau (50) est entièrement recouvert et enveloppé par le matériau de moulage (30).

10. Dispositif selon la revendication 9, **caractérisé en ce qu'**au moins une tôle à lamelles (502) dépassant du matériau de moulage (30) est fixée au noyau (50).

11. Moule de vulcanisation selon l'une quelconque des revendications 8 à 10, **caractérisé en ce que** le noyau (50) présente une pluralité d'ajours (51) qui sont remplis du matériau de moulage (30).

12. Moule de vulcanisation selon la revendication 11, **caractérisé en ce que** les ajours (51) sont réalisés par des alésages dans le noyau (50), ou le noyau (50) présente une structure en forme de grille qui comporte les ajours (51).

13. Moule de vulcanisation selon l'une quelconque des revendications 8 à 12, **caractérisé en ce que** le noyau (50) présente sur la face extérieure des nervures de renforcement (52) rapportées.
